# EUROPEAN PATENT SPECIFICATION

(11) **EP 4 381 133 B1**
(45) Date of publication and mention of the grant of the patent: **14.05.2025**
(21) Application number: 22753800.6
(22) Date of filing: 01.08.2022
(51) Int. Cl.: E01C 13/08

(54) **ARTIFICIAL TURF, METHOD FOR MANUFACTURING ARTIFICIAL TURF AND METHOD FOR RECYCLING AN ARTIFICIAL TURF INTO POLYESTER GRANULES**
KUNSTRASEN, VERFAHREN ZUR HERSTELLUNG VON KUNSTRASEN UND VERFAHREN ZUR WIEDERVERWENDUNG EINES KUNSTRASENS IN POLYESTERGRANULAT
GAZON ARTIFICIEL, PROCÉDÉ DE FABRICATION DE GAZON ARTIFICIEL ET PROCÉDÉ DE RECYCLAGE D'UN GAZON ARTIFICIEL EN GRANULÉS DE POLYESTER

(30) Priority: 03.08.2021 NL 2028913
(43) Date of publication of application: 12.06.2024
(73) Proprietor: Recreational Systems International B.V., 5555 LD Valkenswaard (NL)
(72) Inventor: FIOLET, Arnoud Frederik, 5555 LD Valkenswaard (NL)
(74) Representative: Algemeen Octrooi- en Merkenbureau B.V.
(86) International application number: PCT/NL2022/050455
(87) International publication number: WO 2023/014220

(56) References cited:
- EP-A1- 3 222 766
- EP-A1- 3 469 142
- US-A1- 2008 213 515
- US-A1- 2019 032 286

## Description

The present invention generally relates to artificial turf, and more particularly to an artificial turf that is fully recyclable, as well as to a production method for manufacturing such an artificial turf.

Artificial turf is a synthetic, man-made turf based on at least one substrate or base layer from which a plurality of artificial turf fibers or artificial turf fibers protrude. These artificial turf fibers can be provided in various lengths and as such protrude through the substrate. In addition, depending on the application, fibers may be provided that differ in length, material, shape and other properties such as resilience.

Artificial turf has been around for many years and over the years it can be divided into various generations. The first generation of artificial turf dates from the 1970s and mainly consisted of polyamide fibers. These have the property that they are abrasive and relatively hard. In order for the fibers to stand sufficiently upright, a high fiber density is required and, moreover, in this generation of artificial turf, infill materials such as sand or rubber particles which provide improved damping are often not used. Nowadays, such artificial turf pitches are mainly used for sports and in particular for playing hockey.

In order to further improve the properties, and in particular the sports properties of such first-generation artificial turf pitches, a second-generation artificial turf pitches were developed in the following years, which involved the use of infill material that mainly concerns sand and in which mainly use was made of polypropylene fibers which are relatively were soft compared to the aforementioned polyamide. The introduction of this generation of artificial turf pitches has resulted in a general acceptance of artificial turf as a replacement for mainly turf pitches at amateur sports clubs. In addition to the sport-specific properties, this can also be attributed to the costs of installation, but above all the costs of maintaining the pitch. These costs are lower in relation to the costs for a turf pitch and, moreover, the quality is better guaranteed, so that the fields can be used with a much greater intensity without cancellations due to poor field quality. These second generation artificial turf pitches are nowadays widely used for playing tennis, korfball and handball.

At the end of the 1990s, the third generation of artificial turf pitches were introduced, which are characterized by the use of a longer type of fiber, namely based on polyethylene. By using this polyethylene, a longer fiber length could be obtained. This has greatly improved the sports properties, making sliding tackles in football, for example, safer. This opened the way to a broader implementation within football. In addition, the improved properties, some of which mainly benefited football, have strongly contributed to its acceptance among policy makers, players and also fans within football.

Another important feature for this third generation of artificial turf pitches is that sand as infill material was often supplemented with rubber particles, which greatly improved the slides but also the sport-technical properties such as the ball bounce and shock absorption / energy restitution.

In the years that followed, the acceptance of artificial turf, especially in football, slowly increased. The third-generation artificial turf is further developed by adding extra layers and further improving the fibers and the infill material. This not only increases comfort and sports properties, which is becoming increasingly important for the application and acceptance of artificial turf as a full-fledged replacement for natural turf pitches. In the mid-2000s, national, European and global football associations were already accepting artificial turf as a full-fledged replacement for natural turf pitches and, moreover, standard requirements were imposed on the artificial turf. Within these requirements, a distinction is still made between amateur associations and professional sports clubs.

A few years later, other sports associations such as hockey and rugby also entered into a partnership with the football associations and drew up corresponding requirements for the use of the latest generation of artificial turf pitches within these sports.

In the years that followed, more critical voices arose with regard to the environmental impact of artificial turf and, in particular, the extent to which artificial turf can be recycled. Artificial turf in use today includes materials that are either difficult to recycle at the end of the life of the artificial turf or that deteriorate and show signs of wear. There is therefore a need for a new, fourth generation artificial turf that can be recycled well on the one hand, but on the other hand is of such a quality that it is not inferior to present-day artificial turf of the current, third, generation and shows no or at least virtually no signs of degeneration.

US 2008/0213515 A discloses a backing for artificial turf starting material with hot melts based on amorphous poly-α-olefins and/or modified amorphous poly-α-olefins.

US 2019/0032286 A discloses an artificial turf comprising artificial fibers and base material. The root of the artificial turf fibers is melted or locally melted and the material of the fibers has a melting point lower than that of the material of the base material.

According to a first aspect of the present disclosure, there is provided artificial turf adapted for use as a sports field. The artificial turf comprises at least a substrate, artificial turf fibers and a coating, wherein at least first artificial turf fibers are attached to the substrate, and wherein the substrate is further provided with the coating for providing a tuft withdrawal force of the first artificial turf fibers of at least 30 Newtons. The first artificial turf fibers are made of polyester and/or co-polyester, and the coating is a polyether sulfone adhesive or a thermoplastic co-polyester adhesive for completely recycling the artificial turf into polyester granules.

A co-polyester is polyester that has been modified by the addition of other chemicals.

Thus, according to the first aspect of the present description, an artificial turf is provided consisting of at least three main components, which are formed by first artificial turf fibers, a backing or substrate or carrier layer, and finally a coating. The artificial turf fibers are fixed in the backing by means of a tuft connection or by means of a weaving structure, whereby the substrate or backing thus is either a woven backing or a traditional backing for the purpose of tufting the artificial turf fibers.

Such an artificial turf provides a fully recyclable artificial turf, which solves the problem of meeting the requirements that may be imposed on sustainable sports fields. The artificial turf according to this description can be completely recycled because the material from which the various parts of the artificial turf are made can be completely recovered and reused for the production of new artificial turf pitches.

This invention is based on the fact that no diversity of materials, but preferably only a single high-quality material, is used for the full recycling of an artificial turf pitch. When the artificial turf has reached the end of its life, the material of all parts of the artificial turf can be recovered in a simple manner and converted back into granular base material from which artificial turf can again be manufactured.

Characteristic of the materials of the artificial turf according to the present description is that they do not, or at least virtually do not, degenerate, in contrast to the currently used materials, which do degenerate on the one hand and are difficult to separate on the other. Therefore, according to the present disclosure, an artificial turf is provided in which all materials used are polyester or are made on a polyester basis. This makes separation unnecessary and improves the possibility to recycle everything. This is different from US 2008/0212515 and US 2019/0032286 A, where the hotmelt may be separately recyclable, but where not both the artificial turf fibers and the adhesive are polyester-based.

The use of such a polyester artificial turf fiber also has drawbacks, however, and an important drawback is that the tuft withdrawal force of the fibers to the substrate or backing is in principle less strong than the fibers currently used. In order to provide an artificial turf pitch that at least meets the requirements of most sports associations, this tuft withdrawal force must therefore be further reinforced. This can be done in various ways, for example by choosing a different material for the fiber or for the backing, but this does not benefit the recyclability. Also, the fiber can be given a different shape or structure to improve adhesion. However, it has been found that this often has a negative effect on the sports properties and furthermore complicates the production process. However, in accordance with the present disclosure, an additional layer is applied to the backing or substrate which serves as a coating to further increase fiber strength. Although the use of a coating per se is known, according to the present description it comprises a polyether sulfone adhesive or a thermoplastic co-polyester adhesive. The advantage of this is that on the one hand an improved tuft withdrawal force is obtained, so that the properties of the artificial turf are further improved and with which all the requirements of the sports associations can be met, while on the other hand the product can still be fully recycled, unlike the presently known coatings that have to be processed separately and cannot or can hardly be separated from the fibers and the substrate. The polyether sulfone adhesive or the thermoplastic co-polyester adhesive does, however, have the property that they can be processed into raw materials together with the fibers and the substrate, while it ensures a reinforced connection of the fibers such that it at least equals the properties of non-recyclable artificial turf. According to the present description, a tuft withdrawal force is therefore obtained which is at least 30N, but preferably at least 35N and more preferably at least 40N and which is determined according to ISO standard 4919:2012. The tuft withdrawal force of at least 30N is achieved not only by the coating, but by the interplay of substrate, fiber and coating.

In an example, the first artificial turf fibers are made of polyester. In an example, the coating is a polyether sulfone adhesive. In an example, the first artificial turf fibers are made of polyester and the coating is a polyether sulfone adhesive.

In an example, the artificial turf fibers further comprise additional color pigments to give them more resemblance to natural turf.

Furthermore, the polyester and/or co-polyester of the artificial turf fibers can be provided with additives, for instance to improve the water absorption, the water resistance or degradation by light. For the latter, the polyester and/or co-polyester can preferably be provided with UV stabilizers.

The polyester and/or co-polyester of the artificial turf fibers is preferably a polycondensation polymer, which furthermore preferably has a moisture content of about 50 ppm or 0.005 wt.%. This has the advantage that the degradation during processing is reduced or completely prevented.

The polyester and/or co-polyester artificial turf fibers are preferably obtained by extruding them and then dried for approximately 7 hours with an absorption dryer with a dew point of at least -30 degrees Celsius, at a temperature of max. 150°C is desirable to obtain the desired moisture content. To prevent moisture absorption during transport, dry air or nitrogen can be used in the extrusion process.

A typical processing temperature of the extrusion process can vary between 270°C and 300°C. The processing temperature settings can be adjusted per machine, desired properties and/or application requirements.

The polyester and/or co-polyester artificial turf fibers preferably have an E-Modulus between 2000 and 3000MPa and more preferably about 2500MPa and are preferably food safe i.e. they are approved for direct contact with food which as such contributes to the environmentally friendly of the artificial turf. In addition, the base material from which the polyester and/or co-polyester artificial turf fibers are extruded are provided as crystallized pellets and have excellent wear resistance, temperature resistance and improved impact resistance.

In a further example, the polyether sulfone adhesive or the thermoplastic co-polyester adhesive is a hot melt polyether sulfone adhesive or a dispersion adhesive or a powder coating. This means that the adhesive is processed as a hot melt or as a dispersion adhesive or as a powder coating.

The polyether sulfone adhesive or the thermoplastic co-polyester adhesive is either a hot melt type or a dispersion adhesive type or a powder coating type, wherein a dispersion adhesive has the advantage of being very environmentally friendly. Moreover, such adhesives or coatings can add extra weight to the backing or substrate, making the artificial turf a lot more stable and therefore better suited for various sports and other intensive use. Polyether sulfone has the further advantage that it has a high temperature resistance and therefore shows little or no degradation under high or low temperatures. In addition, it is firm, strong and does not expand much under elevated temperature, which makes it extremely suitable for use as a coating. Compared to existing coatings, a polyether sulfone-based coating such as a hotmelt polyether sulfone adhesive or a polyether sulfone dispersion adhesive is more resistant to water and contains fewer residual monomers, making it less or not harmful to the environment. Also the leaching of zinc, as is the case with currently known coating, does not occur with such a coating according to the present description, so that recycling is simplified.

In comparison with currently known coatings, the polyether sulfone adhesive or the thermoplastic co-polyester adhesive according to the present description has, in addition to the excellent water resistance, various other beneficial properties such as no or virtually no migration of pasticizers, a high dimensional stability and a very good recyclability in combination with other polyesters.

The artificial turf according to the present description even is recyclable to such an extent that it can be recycled up to ten or even more than ten times, without detriment or substantial impairment of the properties of the fibers or the mat.

In an example, the polyether sulfone adhesive or the thermoplastic copolyester adhesive comprises two layers of polyether sulfone adhesive or thermoplastic copolyester adhesive, respectively, wherein the first layer is a hot melt polyether sulfone adhesive or thermoplastic copolyester adhesive and the second layer is a hotmelt polyether sulfone adhesive or thermoplastic co-polyester adhesive with a higher viscosity than the first layer.

For example for hockey, the polyether sulfone adhesive according to an example comprises at least two layers of polyether sulfone adhesive, the second layer being a hot melt polyether sulfone adhesive with a higher viscosity allowing a second substrate to be bonded to the first substrate.

In an example, the polyether sulfone adhesive or the thermoplastic co-polyester adhesive is applied to the substrate at an elevated temperature.

In an example, the elevated temperature is such that upon application it lies in the range between the melting point of the adhesive and the melting point of the first artificial turf fibers and the substrate.

In an example, the elevated temperature is such that the first artificial turf fibers at least partially melt at the location of the attachment to the substrate when the adhesive is applied.

The polyether sulfone hot melt adhesive or the thermoplastic co-polyester adhesive is preferably applied at a temperature which is higher than the melting point of the adhesive but lower than the melting point of the artificial turf fibers and the substrate or backing. This has the advantage that during application the artificial turf fibers and the substrate cause no or at least virtually no damage to the fibers or the substrate.

The polyether sulfone adhesive or a thermoplastic co-polyester adhesive may be applied in at least two ways according to the present disclosure. According to a first example, in a first step or a first phase the artificial turf fibers will be partially melted, after which the polyether sulfone or the thermoplastic co-polyester hotmelt adhesive is applied in a second step or a second phase. In a further example, a polyether sulfone or thermoplastic co-polyester non-woven fleece or a non-woven fabric can be provided for the purpose of further strengthening the connection. This fabric is therefore applied in the polyether sulfone or thermoplastic co-polyester hotmelt adhesive .

According to the second example, a layer of viscous hot-melt adhesive is first applied and in a second phase or second step a polyether sulfone or thermoplastic co-polyester hot-melt adhesive with a higher viscosity is applied, with which a polyether sulfone or thermoplastic co-polyester non-woven fleece or a non-woven fabric is adhered.

This second method or the second example has the advantage that the tuft withdrawal force is higher than in the first method or the first example.

In an example, the polyether sulfone adhesive or the thermoplastic co-polyester adhesive has a melting point in the range between 95 and 140 degrees Celsius.

In an example, the first layer of hot melt polyether sulfone adhesive or thermoplastic co-polyester adhesive has a melting point in the range between 90 and 120 degrees Celsius, and the second layer of hot melt polyether sulfone adhesive or thermoplastic co-polyester adhesive has a melting point in the range between 110 and 140 degrees Celsius.

Preferably, the polyether sulfone adhesive or the thermoplastic co-polyester adhesive has a melting point of between 96 and 140 degrees Celsius and the first layer is applied at a lower melting point of, for example, between 90 and 120 degrees Celsius, more preferably between the 95 and 105 degrees Celsius. This has the advantage that a further improved tuft withdrawal force is obtained. The second layer of polyether sulfone adhesive or thermoplastic co-polyester adhesive preferably has a slightly higher melting point which is preferably between 110 and 140 degrees Celsius and more preferably around 125 degrees Celsius.

In an example, the polyether sulfone adhesive or the thermoplastic co-polyester adhesive has a viscosity in the range between 4000 and 10000 cP, and preferably between 5000 and 8000 cP, and more preferably between 5000 and 6000 cP.

In an example, the polyether sulfone adhesive or thermoplastic co-polyester adhesive comprises at least one of terephthalic acid, isophthalic acid, succinic acid, suberic acid, adipic acid, 1,3-cyclohexanedicarboxylic acid, fumaric acid, or combination thereof.

In an example, the polyether sulfone adhesive comprises at least ethylene glycol, 1,2-propanediol, 1,3-propanediol, 1,5-pentanediol, neopentyl glycol, 1,3-pentanediol or combination thereof.

In an example, the substrate is made of polyester and/or co-polyester.

In an example, the artificial turf comprises a further substrate arranged on the side opposite to the side from which the first artificial turf fibers extend from the substrate, and wherein the further substrate is a polyether sulfone or thermoplastic copolyester covering fleece. A recycled PET can also be used for this.

In a second aspect of the present description a method of manufacturing artificial turf is provided comprising the steps of:
providing a polyester and/or copolyester substrate;
providing first artificial turf fibers of polyester and/or co-polyester;
applying or attaching the first artificial turf fibers to the substrate;
applying a coating to the substrate, over the tufted first artificial turf fibers, to provide a tuft withdrawal force of the first artificial turf fibers of at least 30 Newtons; the coating being a polyether sulfone adhesive for completely recycling the artificial turf into polyester granules.

In a second aspect of the present disclosure, a method for recycling an artificial turf into polyester granules is provided, comprising the steps of:
providing artificial turf according to any of the foregoing description or example in accordance with the first aspect of the invention;
cutting the artificial turf into small parts;
extruding the cut artificial turf to provide a granulate of recycled polyester granules.

In a second aspect of the present description there is provided an artificial turf which is according to the first aspect of the present description, and also with the examples described therein, which artificial turf is arranged according to this second aspect for use as a landscape element. The artificial turf comprises at least a substrate, artificial turf fibers and a coating, wherein at least first artificial turf fibers are attached to the substrate, and wherein the substrate is further provided with the coating for providing a tuft withdrawal force of the first artificial turf fibers of at least 30 Newtons. The first artificial turf fibers are made of polyester and/or co-polyester, and the coating is a polyether sulfone adhesive or a thermoplastic co-polyester adhesive for completely recycling the artificial turf into polyester granules.

The artificial turf according to the present description can therefore be found suitable in every described example and aspect, on the one hand as a landscape element, but on the other hand also as a sports field, or for other applications in which such properties of the artificial turf are desired. Depending on the chosen application, additional features can be added which are specific to that application and which the skilled person will understand to be desirable. This may include extra measures for retaining more or less moisture, infill material, lines, one or more color pigments, etc.

The invention will be further elucidated below on the basis of the description of a number of embodiments of the invention with reference to the following figures, in which
Figure 1 shows a first embodiment of an artificial turf field according to an aspect of the present description;
Figure 2 shows a second embodiment of an artificial turf field according to another aspect of the present description.

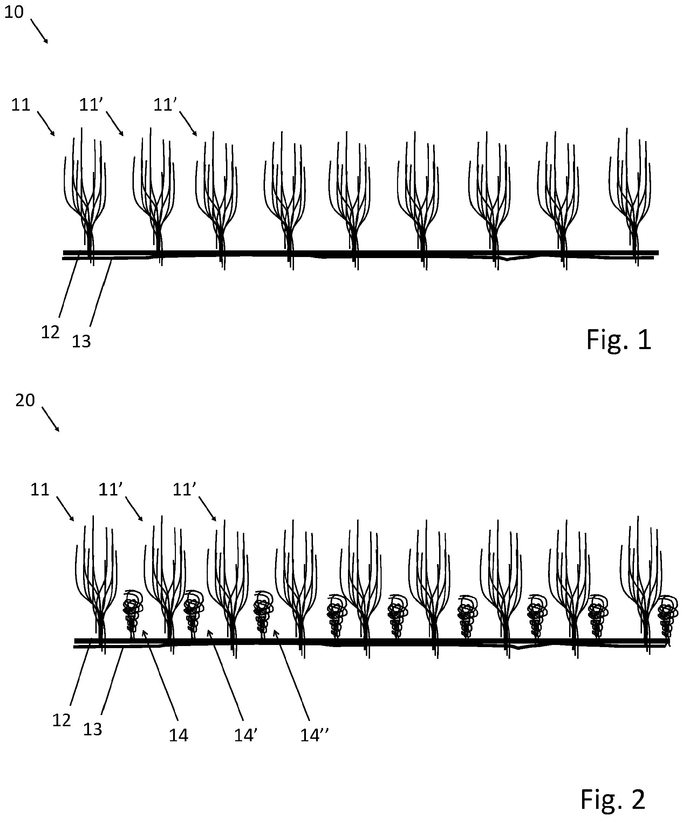

Figure 1 shows an artificial turf 10 adapted for use as a sports field. That is, it at least meets the requirements generally set by sports associations for artificial turf, such as a minimum tuft withdrawal force or tensile strength of the artificial turf fibers that can withstand at least 30N, but preferably more, such as 40N or even above. Furthermore, the artificial turf 10 preferably has a fiber density that is sufficiently high, for instance between 500 and 1750 grams of fibers per square meter, whereby moreover a shock absorption is obtained that is at least between 45 and 70%, as well as a skid resistance torsion that is between the 20 and 55 Nm, and a vertical ball bounce of 0.6 to 1.1 meters while the ball roll is deflated at least between 4 and 15 m, the test methods used for this purpose conforming to EN 15301, EN 12235 and EN 12234.

The field 10 comprises artificial turf fibers 11, 11', 11" which are preferably tufted with several fibers simultaneously at one and the same position in a substrate 12 or a backing. Alternatively, these fibers 11, 11', 11" can also be attached to a woven backing, most preferably being woven into the backing, for example by a v or w-weave connection, or by the fact that the backing itself refers to a woven substrate in which the fibers are tufted.

For the purpose of reinforcing the connection of the fibers 11, 11', 11" to the backing 12, the backing is provided on the underside, being the side facing away from the fibers, with an additional coating. This coating comprises a polyether sulfone adhesive or a thermoplastic co-polyester adhesive which provides improved tuft withdrawal force but also allows the artificial turf to be fully recycled into polyester granules.

In contrast to presently known artificial turf fibers, the artificial turf fibers are not manufactured from polyethylene but from polyester and/or co-polyester. In addition to a color pigment, another additive can also be added to the artificial turf fibers, for example a UV stabilizer to prevent degradation by sunlight and, moreover, to prevent the fibers from discoloring. Other additives can also be added to prevent wear or to make the fibers less sensitive to static charge.

The artificial turf fibers 11, 11', 11" are preferably monofilaments but can also be provided from a monotape or from fibrillated fibers. Fibrillated fibers and monotape fibers are therefore cut from a foil, while a monofilament is injected or extruded through a mold. These are usually stiffer and therefore remain upright better, so that the use of infill material is less necessary, or even completely superfluous.

The fibers are preferably attached as shown in FIG. 1 and 2 attached to the backing 12 or substrate 12 in plucks of multiple fibers. These are woven or tufted as indicated. Tufting has been a known process for some time and is often used in the manufacture of carpets. When tufting, the artificial turf fibers, preferably in tufts, are simultaneously passed through the backing by several needles across the entire width and retrieved again. This provides a loop at the rear or the underside of the backing. This loop can be cut, after which it is further fixed by applying the coating.

The artificial turf mat shown has fibers comprising about 10 to 20 pitches or turfs per 10 cm, whereby a sufficient density is obtained. The length, or rather the pile length, of the fibers is somewhere between 40 and 80 mm, but more preferably between 50 and 70 mm, and can be provided with an infill or infill material or granulate as indicated.

The backing 12 is according to the example shown in FIG. 1 and 2 are also made of polyester and preferably contain some openings to provide water permeability of the backing 12. The backing actually forms the basis of the artificial turf field 10, 20 and therefore concerns a substrate that is sufficiently strong and stable to fixate the artificial turf fibers. Where a backing according to the prior art is usually made of a polypropylene or polyethylene, this is made of polyester according to the example shown. By using the same raw material for the fibers as for the backing, it is possible to recycle the entire system without having to separate the individual materials from each other.

The backing or the substrate 12 can consist of several layers and can also comprise further additives to, for example, add strength by applying fibers in the backing 12. The backing thus offers greater resistance to vertical but above all horizontal forces acting on the backing. can be exercised, for example when a sliding is made.

In Fig. 1 it can be seen that the fibers 11, 11', 11" are arranged in tufts or piles, while in fig. 2 shows a further example in which second or further artificial turf fibers 14, 14', 14" are provided. These further fibers provide extra stability but can also make a significant contribution to the uprightness and resilience of the main fibers 11, 11', 11". In addition, they provide damping and thus completely or at least partly replace the infill material.

## Claims

1. Artificial turf (10) arranged for use as a sports field, the artificial turf comprising at least one substrate (12), wherein at least first artificial turf fibers (11, 11', 11") are attached to the substrate (12), and wherein the substrate (12) is further provided with a coating for providing a tuft withdrawal force of the first artificial turf fibers (11, 11', 11") of at least 30 Newton, **characterized in that** the first artificial turf fibers (11, 11', 11") are made of polyester and/or co-polyester, and wherein the coating concerns a polyether sulfone adhesive or a thermoplastic co-polyester adhesive for completely recycling the artificial turf into polyester granules.

2. Artificial turf (10) arranged for use as a sports field according to claim 1, wherein the polyether sulfone adhesive or the thermoplastic co-polyester adhesive is processed as a hot melt adhesive, as a dispersion adhesive or as a powder coating.

3. Artificial turf (10) arranged for use as a sports field according to claim 1, wherein the polyether sulfone adhesive comprises two layers of polyether sulfone adhesive, the first layer being a hot melt polyether sulfone adhesive and the second layer being a hotmelt polyether sulfone adhesive having a higher viscosity than the first layer.

4. Artificial turf (10) arranged for use as a sports field according to one or more of the preceding claims, wherein the polyether sulfone adhesive is applied to the substrate (12) at an elevated temperature.

5. An artificial turf (10) arranged for use as a sports field according to claim 4, wherein the elevated temperature is such that upon application it lies in the range between the melting point of the adhesive and the melting point of the first artificial turf fibers (11, 11', 11") and the substrate (12).

6. Artificial turf (10) arranged for use as a sports field according to claim 5, wherein the elevated temperature is such that the first artificial turf fibers (11, 11', 11") at least partially melt at the location of the attachment to the substrate (12) when the adhesive is applied.

7. Artificial turf (10) arranged for use as a sports field according to one or more of the preceding claims 4-6, wherein the polyether sulfone adhesive has a melting point in the range between 95 and 140 degrees Celsius.

8. Artificial turf (10) arranged for use as a sports field according to claim 3, and/or one or more of the preceding claims 4-6, wherein the first layer of hot melt polyether sulfone adhesive has a melting point in the range between 90 and 120 degrees Celsius, and the second layer of hot melt polyether sulfone adhesive has a melting point in the range between 110 and 140 degrees Celsius.

9. Artificial turf (10) arranged for use as a sports field according to one or more of the preceding claims, wherein the polyether sulfone adhesive has a viscosity in the range between 4000 and 10000 cP, and preferably between 5000 and 8000 cP, and more preferably between the 5000 and 6000 cP.

10. Artificial turf (10) arranged for use as a sports field according to one or more of the preceding claims, the polyether sulfone adhesive comprising at least one of terephthalic acid, isophthalic acid, succinic acid, suberic acid, adipic acid, 1,3-cyclohexanedicarboxylic acid, fumaric acid, or combination thereof.

11. Artificial turf (10) arranged for use as a sports field according to one or more of the preceding claims, the polyether sulfone adhesive at least comprising ethylene glycol, 1,2-propanediol,1,3-propanediol,1,5-pentanediol, neopentyl glycol, 1,3-pentanediol or combination thereof.

12. Artificial turf (10) arranged for use as a sports field according to one or more of the preceding claims, wherein the substrate (12) is made of polyester and/or co-polyester.

13. Artificial turf (10) arranged for use as a sports field according to one or more of the preceding claims, further comprising a further substrate arranged on the side opposite to the side from which the first artificial turf fibers (11, 11', 11") extend from the substrate (12), and wherein the further substrate comprises a polyether sulfone covering fleece.

14. Method for manufacturing the artificial turf (10) of one or more of the preceding claims, comprising the steps of:
providing a polyester and/or copolyester substrate (12);
providing first artificial turf fibers (11, 11', 11") of polyester and/or co-polyester;
applying or attaching the first artificial turf (11, 11', 11") fibers to the substrate (12);
applying a coating to the substrate (12), over the tufted first artificial turf fibers (11, 11', 11"), to provide a tuft withdrawal force of the first artificial turf fibers (11, 11', 11") of at least 30 Newtons; the coating being a polyether sulfone adhesive for completely recycling the artificial turf into polyester granules.

15. Method for recycling an artificial turf into polyester granules, comprising the steps of:
providing artificial turf (10) according to one or more of the preceding claims 1-13;
cutting the artificial turf into small parts;
extruding the cut artificial turf to provide a granulate of recycled polyester granules.

## Patentansprüche

1. Kunstrasen (10), beschaffen zur Verwendung als Sportfeld, wobei der Kunstrasen wenigstens ein Substrat (12) umfasst, wobei wenigstens erste Kunstrasenfasern (11, 11', 11") an dem Substrat (12) angebracht sind und wobei das Substrat (12) ferner mit einer Beschichtung zur Bereitstellung einer Florausziehkraft der ersten Kunstrasenfasern (11, 11', 11 ") von wenigstens 30 Newton versehen ist, **dadurch gekennzeichnet, dass** die ersten Kunstrasenfasern (11, 11', 11") aus Polyester und/oder Copolyester bestehen, und wobei es sich bei der Beschichtung um einen Polyethersulfonklebstoff oder einen thermoplastischen Copolyesterklebstoff zum vollständigen Recycling des Kunstrasens zu Polyestergranulat handelt.

2. Kunstrasen (10), beschaffen zur Verwendung als Sportfeld, nach Anspruch 1, wobei der Polyethersulfonklebstoff oder der thermoplastische Copolyesterklebstoff als Schmelzklebstoff, als Dispersionsklebstoff oder als Pulverbeschichtuing verarbeitet ist.

3. Kunstrasen (10), beschaffen zur Verwendung als Sportfeld, nach Anspruch 1, wobei der Polyethersulfonklebstoff zwei Schichten eines Polyethersulfonklebstoffs umfasst, wobei die erste Schicht ein Polyethersulfon-Schmelzklebstoff ist und die zweite Schicht ein Polyethersulfon-Schmelzklebstoff mit einer höheren Viskosität als die erste Schicht ist.

4. Kunstrasen (10), beschaffen zur Verwendung als Sportfeld, nach einem oder mehreren der vorstehenden Ansprüche, wobei der Polyethersulfonklebstoff bei einer erhöhten Temperatur auf das Substrat (12) aufgebracht ist.

5. Kunstrasen (10), beschaffen zur Verwendung als Sportfeld, nach Anspruch 4, wobei die erhöhte Temperatur so ist, dass sie bei Aufbringen in dem Bereich zwischen dem Schmelzpunkt des Klebstoffs und dem Schmelzpunkt der ersten Kunstrasenfasern (11, 11', 11') und des Substrats (12) liegt.

6. Kunstrasen (10), beschaffen zur Verwendung als Sportfeld, nach Anspruch 5, wobei die erhöhte Temperatur so ist, dass die ersten Kunstrasenfasern (11, 11', 11") an der Stelle der Befestigung an dem Substrat (12) wenigstens teilweise schmelzen, wenn der Klebstoff aufgebracht wird.

7. Kunstrasen (10), beschaffen zur Verwendung als Sportfeld, nach einem oder mehreren der vorstehenden Ansprüche 4-6, wobei der Polyethersulfonklebstoff einen Schmelzpunkt in dem Bereich zwischen 95 und 140 Grad Celsius aufweist.

8. Kunstrasen (10), beschaffen zur Verwendung als Sportfeld, nach Anspruch 3 und/oder einem oder mehreren der vorstehenden Ansprüche 4-6, wobei die erste Schicht aus Polyethersulfon-Schmelzklebstoff einen Schmelzpunkt in dem Bereich zwischen 90 und 120 Grad Celsius aufweist und die zweite Schicht aus Polyethersulfon-Schmelzklebstoff einen Schmelzpunkt in dem Bereich zwischen 110 und 140 Grad Celsius aufweist.

9. Kunstrasen (10), beschaffen zur Verwendung als Sportfeld, nach einem oder mehreren der vorstehenden Ansprüche, wobei der Polyethersulfonklebstoff eine Viskosität in dem Bereich zwischen 4000 und 10000 cP und vorzugsweise zwischen 5000 und 8000 cP und bevorzugter zwischen 5000 und 6000 cP aufweist.

10. Kunstrasen (10), beschaffen zur Verwendung als Sportfeld, nach einem oder mehreren der vorstehenden Ansprüche, wobei der Polyethersulfonklebstoff wenigstens eines von Terephthalsäure, Isophthalsäure, Bernsteinsäure, Korksäure, Adipinsäure, 1,3-Cyclohexandicarbonsäure, Fumarsäure oder einer Kombination davon umfasst.

11. Kunstrasen (10), beschaffen zur Verwendung als Sportfeld, nach einem oder mehreren der vorstehenden Ansprüche, wobei der Polyethersulfonklebstoff wenigstens Ethylenglycol, 1,2-Propandiol, 1,3-Propandiol, 1,5-Pentandiol, Neopentylglycol, 1,3-Pentandiol oder eine Kombination davon umfasst.

12. Kunstrasen (10), beschaffen zur Verwendung als Sportfeld, nach einem oder mehreren der vorstehenden Ansprüche, wobei das Substrat (12) aus Polyester und/oder Copolyester besteht.

13. Kunstrasen (10), beschaffen zur Verwendung als Sportfeld, nach einem oder mehreren der vorstehenden Ansprüche, ferner umfassend ein weiteres Substrat, das auf der Seite gegenüber der Seite, von der sich die ersten Kunstrasenfasern (11, 11', 11") von dem Substrat (12) erstrecken, angeordnet ist, und wobei das weitere Substrat ein Polyethersulfon-Deckvlies umfasst.

14. Verfahren zur Herstellung des Kunstrasen (10) nach einem oder mehreren der vorstehenden Ansprüche, umfassend die Schritte:
Bereitstellen eines Polyester- und/oder Copolyestersubstrats (12);
Bereitstellen erster Kunstrasenfasern (11, 11', 11") aus Polyester und/oder Copolyester;
Aufbringen oder Befestigen der ersten Kunstrasenfasern (11, 11', 11") auf das bzw. an dem Substrat (12);
Aufbringen einer Beschichtung auf das Substrat (12) über den getufteten ersten Kunstrasenfasern (11, 11', 11"), um eine Florausziehkraft der ersten Kunstrasenfasern (11, 11', 11") von wenigstens 30 Newton bereitzustellen; wobei die Beschichtung ein Polyethersulfonklebstoff zum vollständigen Recycling des Kunstrasens zu Polyestergranulat ist.

15. Verfahren zum Recycling eines Kunstrasens zu Polyestergranulat, umfassend die Schritte:
Bereitstellen von Kunstrasen (10) nach einem oder mehreren der vorstehenden Ansprüche 1-13;
Schneiden des Kunstrasens in kleine Teile;
Extrudieren des geschnittenen Kunstrasens, um ein Granulat von recyceltem Polyestergranulat zu erhalten.

## Revendications

1. Gazon artificiel (10) agencé pour une utilisation comme terrain de sport, le gazon artificiel comprenant au moins un substrat (12), dans lequel au moins des premières fibres de gazon artificiel (11, 11', 11") sont fixées au substrat (12), et dans lequel le substrat (12) est en outre muni d'un revêtement pour fournir une force d'arrachement de touffes des premières fibres de gazon artificiel (11, 11', 11") d'au moins 30 Newtons, **caractérisé en ce que** les premières fibres de gazon artificiel (11, 11', 11") sont réalisées en polyester et/ou en copolyester, et dans lequel le revêtement concerne un adhésif de polyéthersulfone ou un adhésif de copolyester thermoplastique pour recycler complètement le gazon artificiel en granules de polyester.

2. Gazon artificiel (10) agencé pour une utilisation comme terrain de sport selon la revendication 1, dans lequel l'adhésif de polyéthersulfone ou l'adhésif de copolyester thermoplastique est traité comme un adhésif thermofusible, comme un adhésif en dispersion ou comme un revêtement en poudre.

3. Gazon artificiel (10) agencé pour une utilisation comme terrain de sport selon la revendication 1, dans lequel l'adhésif de polyéthersulfone comprend deux couches d'adhésif de polyéthersulfone, la première couche étant un adhésif de polyéthersulfone thermofusible et la seconde couche étant un adhésif de polyéthersulfone thermofusible ayant une viscosité supérieure à celle de la première couche.

4. Gazon artificiel (10) agencé pour une utilisation comme terrain de sport selon une ou plusieurs des revendications précédentes, dans lequel l'adhésif de polyéthersulfone est appliqué au substrat (12) à une température élevée.

5. Gazon artificiel (10) agencé pour une utilisation comme terrain de sport selon la revendication 4, dans lequel la température élevée est telle que lors de l'application, elle se trouve dans la plage comprise entre le point de fusion de l'adhésif et le point de fusion des premières fibres de gazon artificiel (11, 11', 11") et du substrat (12).

6. Gazon artificiel (10) agencé pour une utilisation comme terrain de sport selon la revendication 5, dans lequel la température élevée est telle que les premières fibres de gazon artificiel (11, 11', 11") fondent au moins partiellement à l'emplacement de la fixation au substrat (12) lorsque l'adhésif est appliqué.

7. Gazon artificiel (10) agencé pour une utilisation comme terrain de sport selon une ou plusieurs des revendications précédentes 4 à 6, dans lequel l'adhésif de polyéthersulfone a un point de fusion dans la plage comprise entre 95 et 140 degrés Celsius.

8. Gazon artificiel (10) agencé pour une utilisation comme terrain de sport selon la revendication 3, et/ou une ou plusieurs des revendications précédentes 4 à 6, dans lequel la première couche d'adhésif de polyéthersulfone thermofusible a un point de fusion dans la plage comprise entre 90 et 120 degrés Celsius, et la seconde couche d'adhésif de polyéthersulfone thermofusible a un point de fusion dans la plage comprise entre 110 et 140 degrés Celsius.

9. Gazon artificiel (10) agencé pour une utilisation comme terrain de sport selon une ou plusieurs des revendications précédentes, dans lequel l'adhésif de polyéthersulfone a une viscosité dans la plage comprise entre 4000 et 10000 cP, et de préférence entre 5000 et 8000 cP, et plus préférablement entre 5000 et 6000 cP.

10. Gazon artificiel (10) agencé pour une utilisation comme terrain de sport selon une ou plusieurs des revendications précédentes, l'adhésif de polyéthersulfone comprenant au moins l'un parmi un acide téréphtalique, un acide isophtalique, un acide succinique, un acide subérique, un acide adipique, un acide 1,3-cyclohexanedicarboxylique, un acide fumarique ou une combinaison de ceux-ci.

11. Gazon artificiel (10) agencé pour une utilisation comme terrain de sport selon une ou plusieurs des revendications précédentes, l'adhésif de polyéthersulfone comprenant au moins de l'éthylène glycol, du 1,2-propanediol, du 1,3-propanediol, du 1,5-pentanediol, du néopentyl glycol, du 1,3-pentanediol ou une combinaison de ceux-ci.

12. Gazon artificiel (10) agencé pour une utilisation comme terrain de sport selon une ou plusieurs des revendications précédentes, dans lequel le substrat (12) est réalisé en polyester et/ou en copolyester.

13. Gazon artificiel (10) agencé pour une utilisation comme terrain de sport selon une ou plusieurs des revendications précédentes, comprenant en outre un substrat supplémentaire agencé sur le côté opposé au côté à partir duquel les premières fibres de gazon artificiel (11, 11', 11") s'étendent à partir du substrat (12), et dans lequel le substrat supplémentaire comprend une toison de couverture en polyéthersulfone.

14. Procédé de fabrication du gazon artificiel (10) selon une ou plusieurs des revendications précédentes, comprenant les étapes :
de fourniture d'un substrat en polyester et/ou en copolyester (12) ;
de fourniture de premières fibres de gazon artificiel (11, 11', 11") de polyester et/ou copolyester ;
d'application ou de fixation des premières fibres de gazon artificiel (11, 11', 11") au substrat (12) ;
d'application d'un revêtement au substrat (12), sur les premières fibres de gazon artificiel touffetées (11, 11', 11"), pour fournir une force d'arrachement de touffes des premières fibres de gazon artificiel (11, 11', 11") d'au moins 30 Newtons ; le revêtement étant un adhésif de polyéthersulfone pour recycler complètement le gazon artificiel en granules de polyester.

15. Procédé de recyclage d'un gazon artificiel en granules de polyester, comprenant les étapes :
de fourniture de gazon artificiel (10) selon une ou plusieurs des revendications précédentes 1 à 13 ;
de coupe du gazon artificiel en petites parties
d'extrusion du gazon artificiel coupé pour fournir un granulé de granules de polyester recyclés.
